# EUROPÄISCHE PATENTSCHRIFT

(11) **EP 2 959 802 B1**
(45) Veröffentlichungstag und Bekanntmachung des Hinweises auf die Patenterteilung: **14.03.2018**
(21) Anmeldenummer: 15172728.6
(22) Anmeldetag: 18.06.2015
(51) Int. Cl.: A47B 88/427, F16B 12/04

(54) **VORRICHTUNG ZUR ANBRINGUNG EINER FÜHRUNGSEINHEIT AN EINEM MÖBELTEIL**
DEVICE FOR APPLYING A GUIDE UNIT TO A PIECE OF FURNITURE
DISPOSITIF DESTINE A L'APPLICATION D'UNE UNITE DE GUIDAGE SUR UNE PARTIE DE MEUBLE

(30) Priorität: 25.06.2014 DE 202014102893 U
(43) Veröffentlichungstag der Anmeldung: 30.12.2015
(73) Patentinhaber: Grass GmbH, 6973 Höchst (AT)
(72) Erfinder: Rödder, Bernd, 53809 Ruppichteroth (DE); Schmidt, Klaus-Dieter, 51588 Nümbrecht (DE); Schnell, Jürgen, 53797 Lohmar (DE); Hirtsiefer, Artur, 53819 Neunkirchen (DE); Henscheid, Heinz-Josef, 53809 Ruppichteroth (DE)
(74) Vertreter: Otten, Roth, Dobler & Partner mbB Patentanwälte

(56) Entgegenhaltungen:
- WO-A1-2012/092634
- DE-A1- 3 632 442
- DE-U1-202006 003 035
- DE-U1-202006 006 065

## Beschreibung

Die Erfindung betrifft eine Vorrichtung zur Anbringung einer Führungseinheit an einem Möbelteil gemäß dem Oberbegriff des Anspruchs 1 sowie ein Möbel.

Vorrichtungen, mit denen sich eine Führungseinheit an einem Möbelteil anbringen lässt, sind auf dem Gebiet des Möbelbaus in verschiedensten Ausführungen bekannt, z.B. aus der DE 36 32 442 A1, der DE 20 2006 006 065 U1, der DE 20 2006 003 035 U1 oder der WO 2012/092634 A1. Insbesondere für ein Möbelteil, das gegenüber einem zweiten Möbelteil beweglich geführt ist, wird eine Anbringvorrichtung häufig für ein Positionieren der Möbelteile zueinander - vorzugsweise in einer z.B. Schließstellung des Möbelteils am zweiten Möbelteil - oder bezüglich der Führungsvorrichtung ausgebildet.

Der vorliegenden Erfindung liegt die Aufgabe zugrunde, eine Vorrichtung zur Anbringung einer Führungseinheit bereitzustellen, die bei vergleichsweise einfacher Anbringung eine verbesserte Positionierbarkeit bietet.

Die Aufgabe wird mit einer erfindungsgemäßen Vorrichtung mit den Merkmalen des Anspruchs 1 gelöst. Bevorzugte und vorteilhafte Ausführungen der Erfindung sind in den abhängigen Ansprüchen angegeben.

Die Erfindung geht von einer Vorrichtung zur Anbringung einer Führungseinheit an einem ersten Möbelteil, das gegenüber einem zweiten Möbelteil beweglich geführt ist, wobei die Führungseinheit eine am zweiten Möbelteil angeordnete Korpusschiene und eine am ersten Möbelteil angeordnete Bewegungsschiene umfasst, aus.

Der Kern der Erfindung besteht darin, dass an einer Unterkante der Vorrichtung, die zur Anordnung an der Bewegungsschiene vorgesehen ist, zwei Anlageabschnitte in einem Abstand voneinander angeordnet sind, wobei jeder der Anlageabschnitte an einer dem jeweils anderen Anlageabschnitt zugewandten Seite ausgebildet ist, so dass zwischen den Anlageabschnitten die Bewegungsschiene anordenbar ist, wobei die Anlageabschnitte an der Vorrichtung derart verstellbar gelagert sind, dass eine Position der Anlageabschnitte veränderbar ist, so dass die Positionen der Anlageabschnitte an der Vorrichtung unabhängig voneinander einstellbar sind, um im montierten Zustand das erste Möbelteil in einer horizontalen Richtung bezüglich der Bewegungsschiene ausrichten zu können. Dies bietet den Vorteil, dass sich ein seitliches Bewegungsspiel des ersten Möbelteils an der Bewegungsschiene begrenzen oder vollständig vermeiden lässt.

Das erste Möbelteil kann ein Möbelauszug, z.B. eine Schublade sein, die mit einer Führungseinheit an einem z.B. Möbelkorpus als zweitem Möbelteil beweglich geführt und insbesondere angebracht ist. Der Möbelkorpus kann ein Korpus von z.B. einem Schrank, z.B. einer Kommode, z.B. eines Tisches bzw. eines beliebigen Möbels sein, das in ähnlicher Weise für eine bewegliche Lagerung und Aufnahme eines Möbelauszugs ausgebildet ist. Für eine stabile Bewegungsführung kann das erste Möbelteil am zweiten Möbelteil mit zwei Führungseinheiten beweglich geführt sein, die vorzugsweise an entgegengesetzten Seiten des ersten Möbelteils insbesondere mit parallelen Führungswegen angebracht sind.

Die Unterkante ist eine Außenkante der Vorrichtung, von der vorzugsweise eine äußerste Erstreckung der Vorrichtung an einer Seite, d.h. eine Außenseite begrenzt ist und die für eine nach unten gerichtete Anordnung in einem montierten Zustand vorgesehen ist. Vorzugsweise ist die Vorrichtung für eine Montage am ersten Möbelteil vorgesehen, bei der die Unterkante der Bewegungsschiene und insbesondere einer Oberseite der Bewegungsschiene zugewandt angeordnet ist. Vorzugsweise ist dabei zumindest ein Abschnitt der Unterkante für ein Aufliegen und insbesondere für ein flächiges Anliegen an einer Oberfläche der Bewegungsschiene vorgesehen.

Die Vorrichtung ist vorzugsweise für eine Montage an einer Rückseite des ersten Möbelteils, z.B. einer Schubladenrückwand, vorgesehen. Im montierten Zustand ist vorzugsweise die Unterkante der Vorrichtung im Bereich einer Unterkante einer Rückwand des ersten Möbelteils angeordnet und kann insbesondere über die Unterkante der Rückwand des ersten Möbelteils nach unten hervorstehen, wenn insbesondere die Stabilität bzw. Festigkeit der Vorrichtung dazu ausgelegt ist, das erste Möbelteil z.B. im Bereich der Rückwand auf der Bewegungsschiene abzustützen.

Im montierten Zustand der Vorrichtung können anstelle der einen Unterkante mehrere Unterkanten für ein Aufliegen der Vorrichtung bereitgestellt sein. Mehrere der Unterkanten und insbesondere alle Unterkanten können beispielsweise in einer gemeinsamen Ebene liegen, um Kräfte beim Aufliegen relativ gleichmäßig auf die mehreren Unterkanten zu verteilen. Des Weiteren können mehrere, von einander getrennt ausgebildete Unterkanten in unterschiedlichen, z.B. zueinander parallelen Positionen angeordnet sein, damit z.B. bei unterschiedlich geneigten Anbringungen der Vorrichtung nur jeweils eine Unterkante für ein Aufliegen auswählbar ist.

Vorzugsweise begrenzt die Unterkante einen Flächenbereich, der für ein Aufliegen auf der Bewegungsschiene vorgesehen ist. Gegebenenfalls trifft dies auf mehrere Unterkanten zu, die jeweils einen von mehreren separaten Flächenbereichen begrenzen. Der Flächenbereich kann z.B. einen Abschnitt einer Stirnseite an der entsprechenden Außenseite der Vorrichtung begrenzen. Die Unterkante kann dabei eine Unterseite der Vorrichtung bilden.

Die Unterkante und gegebenenfalls ein von der Unterkante begrenzter Flächenbereich können zumindest teilweise und insbesondere zu einem Großteil - d.h. zu mehr als der Hälfte einer insbesondere durchgehenden Längserstreckung der Unterkante - unter einem Schwerpunkt bzw. einem z.B. geometrischen Mittelpunkt der Vorrichtung angeordnet sein. Dadurch ist eine konzentrierte, z.B. einseitige Kraftübertragung vermeidbar, wodurch die Vorrichtung vorteilhaft lange haltbar und einsetzbar ist.

Vorzugsweise ist die Unterkante an eine Form einer Oberseite der Bewegungsschiene angepasst. Dafür kann die Unterkante gegebenenfalls gerade und ein von ihr begrenzter Flächenbereich an der Unterseite eben ausgebildet sein. Außerdem kann die Unterkante mit z.B. mehreren Noppen, Stollen oder ähnlichen hervorstehenden Strukturen versehen sein, die für ein Aufliegen auf der Bewegungsschiene einsetzbar sind. Die Unterkante kann damit vorteilhaft z.B. an eine aufgeraute, insbesondere strukturierte Oberfläche der Bewegungsschiene angepasst sein.

Die Anschlagabschnitte können zum Beispiel als gerade ebene Flächen ausgebildet sein, die z.B. senkrecht zur insbesondere geraden Unterkante der Vorrichtung ausgebildet sind. Dadurch ist eine erleichterte Montage möglich, weil die Schublade mit beiden Anschlägen beim Anbringen an der Bewegungsschiene geführt ist. Hiermit lässt sich ein Bewegungsspiel der Schublade beim Montieren begrenzen oder ganz vermeiden. Die Vorrichtung braucht gegebenenfalls nur an einer Seite einer z.B. Rückwand des ersten Möbelteils zur Anbringung an einer Bewegungsschiene bereitgestellt zu werden. Dabei kann an einer Gegenseite - z.B. einer linken Seite der Rückwand, wenn die erfindungsgemäße Vorrichtung rechts angebracht ist - ein z.B. relativ einfach aufgebautes und entsprechend kostengünstiges Schienenanbringbauteil für das erste Möbelteil vorgesehen sein. Des Weiteren kann dabei ein Bauteil für eine Anbringung an der Gegenseite gänzlich verzichtbar sein, wenn eine oder zwei Bewegungsschienen beispielsweise näher an einer parallel zur Bewegungsrichtung liegenden Mittelachse einer Unterseite als an Außenseiten von Seitenzargen des ersten Möbelteils gelegen sind. Erfindungsgemäß sind die Positionen der Anlageabschnitte an der Vorrichtung unabhängig voneinander einstellbar. Dies bietet den Vorteil, dass sich die Vorrichtung vorteilhaft für verschiedene Anbringpositionen der Bewegungsschiene am ersten Möbelteil sowie für unterschiedliche Bewegungsschienen mit verschiedenen zum Beispiel Breiten einsetzen lässt. Die beiden positionierbaren Anlageabschnitte können mit zwei gleichen oder mit zwei verschiedenen Verstelleinrichtungen einstellbar sein.

Vorzugsweise ist zumindest einer der Anlageabschnitte an einem Abstützelement angebracht, das zum Abstützen der Vorrichtung an der Bewegungsschiene ausgebildet ist. Dabei kann die Unterkante vom Abstützelement bereitgestellt sein und gegebenenfalls zusammen mit dem Vorsprung einen Anschlagwinkel bilden. Die Vorrichtung lässt sich vereinfachen, wenn das Abstützelement insbesondere seitlich verschiebbar mit der Vorrichtung verbunden ist, damit z.B. eine Position des Anlageabschnitts an einer Unterseite der Vorrichtung einstellbar ist.

Des Weiteren ist es bevorzugt, dass die Position der beiden Anlageabschnitte an der Vorrichtung miteinander gekoppelt einstellbar sind. Beispielsweise lässt sich dadurch gewährleisten, dass durch eine seitliche Einstellung eines des ersten Anlageabschnitts der zweite Anlageabschnitt grundsätzlich mitgeführt ist.

Eine weitere bevorzugte Ausführung der Erfindung sieht vor, dass der Abstand zwischen den beiden Anlageabschnitten, insbesondere zwischen Anschlagabschnitten, fest vorgegeben ist. Dadurch lässt sich die Vorrichtung vorteilhaft stabil ausführen. Insbesondere wenn ein Abstand zwischen den Anlageabschnitten an eine Breite einer Bewegungsschiene angepasst ist, lässt sich dadurch eine zuverlässige Positionierung vergleichsweise einfach gewährleisten. Zum Beispiel können die beiden Anlageabschnitte über ein verschiebbares Verbindungsjoch miteinander verbunden sein. Das Abstützelement und das Verbindungsjoch können einstückig insbesondere aus einem Material durchgehend miteinander verbunden sein.

Vorzugsweise ist die Position zumindest eines der Anlageabschnitte durch eine Stellschraube verstellbar. Dadurch lässt sich eine Positionierung mit einer Fixierung bzw. Anbringung und Befestigung kombinieren.

Des Weiteren kann die Position von zumindest einem der Anlageabschnitte mittels eines Drehelements mit einer spiralförmigen Stellkontur verstellbar sein. Das Drehelement kann beispielsweise an der Vorrichtung an einer vorgegebenen Position drehbar angebracht sein, wobei ein Eingreifabschnitt z.B. eines der Anlageabschnitte an der spiralförmigen Stellkontur für ein Positionieren eingreift. Für eine Positionierung z.B. eines der Anlageabschnitte oder von beiden Anlageabschnitten ist außerdem ein Drehelement mit einer zum Drehzentrum exzentrisch angeordneten z.B. kreisförmigen Stellkontur einsetzbar. Die Stellkontur kann des Weiteren ellipsenförmig sein. Die Stellkontur kann beispielsweise als Nut an einer Eingreifseite des Drehelements geformt sein. Dadurch ist vorteilhaft eine vergleichsweise genaue Einstellbarkeit bei einer vergleichsweise flachen Bauweise erreichbar.

Am Abstützelement ist vorzugsweise eine Arretierungsaufnahme für eine Arretierungseinrichtung der Bewegungsschiene ausgebildet. Damit lassen sich Freiheitsgrade einer Bewegung insbesondere seitwärts zur Auszugsrichtung des Möbelteils einschränken.

Die Arretierungsaufnahme kann für eine spielfreie Aufnahme eines Abschnitts der Arretierungseinrichtung ausgebildet sein, wodurch eine Positionierung der Bewegungsschiene am Möbelelement über eine vergleichsweise lange Nutzungsdauer sichergestellt werden kann.

Die Vorrichtung umfasst vorzugsweise ein Montageelement, das für eine Anbringung der Vorrichtung am ersten Möbelteil vorgesehen ist. Das Montageelement kann beispielsweise einen Dübel oder beispielsweise eine Bohrung für ein Anschrauben der Vorrichtung am ersten Möbelteil aufweisen.

Vorzugsweise sind die verstellbaren Anlageabschnitte am Montageelement verschiebbar gelagert. Des Weiteren kann einer der Anlageabschnitte über ein Zwischenelement, insbesondere am Zwischenelement, zum Montageelement verschiebbar gelagert sein, wodurch der Anlageabschnitt beispielsweise in verschiedenen Richtungen bezüglich des Montageelements positionierbar ist.

Der Grundgedanke der Erfindung lässt sich in Richtung einer Anbringvorrichtung weiterentwickeln, die mit zwei Anbringeinheiten zur Anbringung einer Führungsvorrichtung an einem ersten Möbelteil ausgestattet ist. Das Möbelteil ist mit zwei Führungseinheiten der Führungsvorrichtung gegenüber einem zweiten Möbelteil beweglich geführt, wobei jede Führungseinheit eine am ersten Möbelteil angeordnete Bewegungsschiene umfasst und wobei für jede Bewegungsschiene jeweils eine der Anbringeinheiten für eine Anbringung des ersten Möbelteils an der entsprechenden Führungseinheit vorgesehen ist. Erfindungsgemäß ist dabei zumindest eine der beiden Anbringeinheiten eine erfindungsgemäße Vorrichtung der zuvor beschriebenen Art. Eine erste erfindungsgemäß ausgebildete der Anbringeinheiten kann dabei für eine genaue Positionierung vorgesehen sein, um ein Festlager der Anbringvorrichtung zu bilden. Dadurch lässt sich die zweite Anbringeinheit für eine zweite Bewegungsschiene vergleichsweise einfacher, insbesondere ohne positionierbare Anlageabschnitte ausbilden. Die Anlageabschnitte der zweiten Anbringeinheit können z.B. in einen Abstand angeordnet sein, der z.B. beim Einstellen der ersten Anbringeinheit ein Bewegungsspiel des Möbelteils an den zweiten Bewegungsschiene bereitstellt und z.B. bei einer Montage des Möbelteils an z.B. zwei Führungseinheiten Montagebewegungen derart begrenzt, dass das Möbelteil relativ schnell und komfortabel anbringbar ist. Insbesondere können beide Anbringeinheiten in Form von erfindungsgemäßen Vorrichtungen ausgebildet sein, wobei die beiden Anbringeinheiten vorzugsweise spiegelsymmetrisch zueinander ausgebildet sind. Dadurch lässt sich eine erfindungsgemäße Anbringvorrichtung vorteilhaft platzsparend insbesondere in einer flachen Bauweise ausführen. Dabei lassen sich z.B. Stellschrauben bzw. Drehelemente mit Stellkonturen vorteilhaft so anordnen, dass sie nicht über ein Querschnittsprofil des Möbelteils seitlich hervorragen und dadurch gegebenenfalls Störungen z.B. von Bewegungen des Möbelteils beim Ein- und Ausfahren ermöglichen.

Nachfolgend wird die Erfindung anhand von Ausführungsbeispielen beschrieben und mit Hilfe von Zeichnungen erläutert. Es zeigen:
- Figur 1: eine schematische perspektivische Ansicht einer Rückseite einer erfindungsgemäßen Vorrichtung,
- Figur 2: eine schematische Frontansicht einer Anbringseite einer zweiten nicht erfindungsgemäßen Vorrichtung in teilweise transparenter Darstellung,
- Figur 3: eine schematische Rückansicht der zweiten Ausführung,
- Figur 4: eine schematische perspektivische Ansicht einer dritten nicht erfindungsgemäßen Vorrichtung

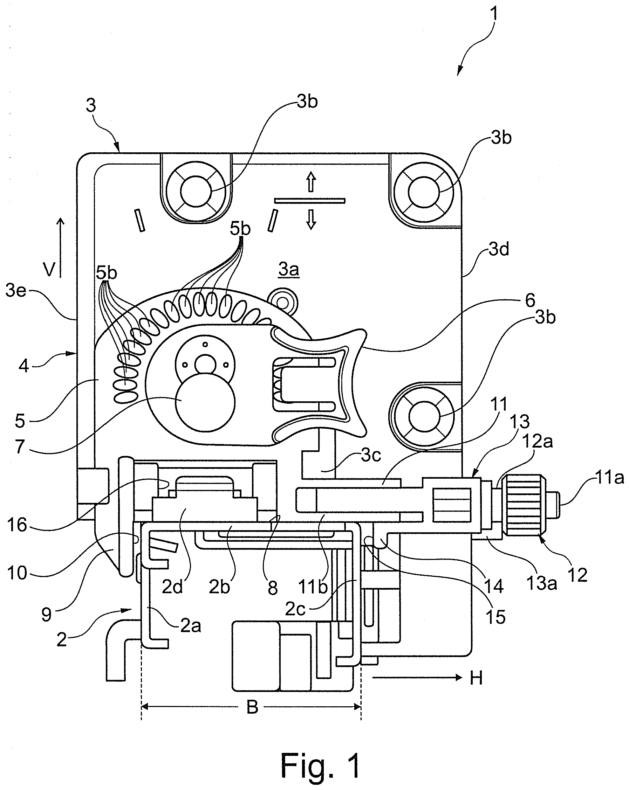

In Figur 1 ist ein erstes Ausführungsbeispiel einer erfindungsgemäßen Vorrichtung 1 gezeigt, die nachfolgend als Montagevorrichtung 1 bezeichnet wird. Die Montagevorrichtung 1 befindet sich an einer Anbringeinrichtung 2d einer Bewegungsschiene 2 an deren hinteren Endabschnitt. Dabei ist die Bewegungsschiene 2 der einzige dargestellte Bestandteil einer Führungseinheit.

Die Bewegungsschiene 2 weist ein rechteckiges, kanalförmiges Querschnittsprofil auf, das seitlich durch gerade, vertikale Profilabschnitte 2a und 2c begrenzt ist. Die vertikalen Profilabschnitte 2a und 2c sind durch einen geraden, horizontalen Profilabschnitt 2b verbunden, der das Querschnittsprofil der Bewegungsschiene 2 nach oben begrenzt. Die Anbringeinrichtung 2d bildet einen Anschlag für eine Anbringung eines beweglichen Möbelteils (nicht gezeigt), durch den ein Verschieben des Möbelteils bei einer Montage über ein Ende der Bewegungsschiene 2 hinaus unterbunden ist.

Die Montagevorrichtung 1 weist eine Montageplatte 3 auf, die an mehreren Stellen mit Bohrungen 3b versehen ist, um die Montagevorrichtung an einer Rückwand (nicht gezeigt) eines bewegbaren Möbelteils, z.B. einer Schublade, anzuschrauben. Die Figur 1 zeigt eine Ansicht einer Rückseite der Montagevorrichtung 1, wodurch eine Rückseite 3a der Montageplatte 3 sichtbar ist.

Zur Rückseite 3a entgegengesetzt ist an der Montageplatte 3 eine Anbringseite (nicht gezeigt) gelegen, die als eine z.B. geschlossene, ebene Fläche zum Anliegen an einer Rückwand (nicht gezeigt) eines bewegbaren Möbelteils (nicht gezeigt) ausgebildet sein kann. Dadurch kann die Montageplatte 3 mit der Anbringseite flächig an der Rückwand des bewegbaren Möbelteils anliegen, wenn die Montageplatte 3 an den Bohrungen 3b an der Rückwand z.B. angeschraubt ist. Die Anbringseite kann eine Ebene für ein Anliegen an einem Möbelteil vorgeben, über die kein Abschnitt der Montagevorrichtung 1 in senkrechter Richtung zur Ebene an der Anbringseite hinausragt, um damit verbundene Einschränkungen bei einer Anbringung der Montagevorrichtung 1 an der Rückseite des Möbelteils zu vermeiden.

Die Montagevorrichtung 1 weist eine Höhenverstelleinrichtung 4 auf, die eine an der Montageplatte 3 vertikal verschiebbar gelagerte Stützplatte 5 umfasst. Dabei sind vertikale Verschiebebewegungen der Stützplatte 5 z.B. an einem Führungsvorsprung 3c - hier beispielsweise in Form einer geraden, vertikal erstreckten Leiste - der Montageplatte 3 geführt.

In der Stützplatte 5 ist ein Stellhebel 6 derart drehbar gelagert, dass Stützkräfte vom Stellhebel 6 auf die Stützplatte 5 übertragbar sind. Am Stellhebel 6 ist ein Schiebebolzen 7 angebracht, der durch die Stützplatte 5 hindurchreicht und in die Montageplatte 3 derart eingreift, dass über den Schiebebolzen 7 Stützkräfte vom Stellhebel 6 auf die Montageplatte übertragbar sind.

Der Schiebebolzen 7 ist am Stellhebel 6 exzentrisch zu einem Drehzentrum des Stellhebels 6 angeordnet. Aufgrund der exzentrischen Anordnung des Schiebebolzens 7 am Stellhebel 6 sind die Stützplatte 5 und die Montageplatte 3 durch ein Schwenken des Stellhebels 6 zueinander in vertikaler Richtung V verstellbar.

Über einen zentralen Abschnitt an einer Unterseite der Stützplatte 5 ist eine gerade Unterkante 8 ausgebildet, die für ein Aufliegen auf der Bewegungsschiene 2 ausgebildet ist. Die Unterkante 8 ist linksseitig durch einen Vorsprung 9 begrenzt, von der Stützplatte 5 aus nach unten ragt. Eine dem Profilabschnitt 2a der Bewegungsschiene 2 zugewandte Anlagefläche 10 des Vorsprungs 9 ist rechtwinklig zur Unterkante 8 angeordnet. Dadurch lässt sich die Anlagefläche 10 planparallel zum Profilabschnitt 2a der Bewegungsschiene 2 anordnen.

Entlang der Unterkante 8 ist das Stützelement 5 in einem unteren Bereich nach rechts durch einen Balkenabschnitt 11 verlängert. Dabei ist ein rechter Teil des Balkenabschnitts 11 als zylindrischer Gewindebolzen 11a ausgebildet, auf den sich eine Rändelmutter 12 schrauben lässt. An einem im Wesentlichen rechteckig geformter Verbindungsabschnitt 11b des Balkenabschnitts 11 ist die Unterkante 8 verlängert. Auf den Balkenabschnitt 11 ist ein Schlittenelement 13 z.B. aufgesteckt, das am Balkenabschnitt 11 geführt ist. An der Rändelmutter 12 ist eine Nut 12a ausgebildet, die zum Eingriff eines Eingreifabschnitts 13a des Schlittenelements 13 vorgesehen ist. Durch Drehen der Rändelmutter 12 am Gewindebolzen 11a lässt sich das Schlittenelement 13 horizontal in einer Ebene des Stützelements 5 verschieben und positionieren.

An einer Unterseite des Schlittenelements 13 ragt ein Vorsprung 14 nach unten hervor. An einer dem Vorsprung 9 zugewandten Seite des Vorsprungs 14 ist ein vertikaler ebener Anlageabschnitt 15 ausgebildet. Vorzugsweise sind die Anlageabschnitte 10 und 15 planparallel zueinander ausgebildet, wodurch beide Anlageabschnitte 10, 15 zugleich flächig an der Bewegungsschiene 2 anliegen können. Vorzugsweise sind beide Anlageabschnitte 10 und 15 mit ebenen Flächen zur Anlage an der Bewegungsschiene 2 versehen. Gegebenenfalls kann zumindest einer der Anlageabschnitte 10, 15 als Kante ausgebildet sein. Vorzugsweise sind Verlauf und Form der Anlageabschnitte 10 und 15 an das jeweilige Querschnittsprofil der Bewegungsschiene 2 angepasst.

Vor Beginn einer Anbringung eines Möbelteils (nicht gezeigt) an der Bewegungsschiene 2, die z.B. gemeinsam mit einer übrigen Führungseinheit (nicht gezeigt) in einem Möbelkorpus (nicht gezeigt) angebracht sein kann, wird die Montagevorrichtung 1 durch Anschrauben der Montageplatte 3 an einer Rückwand (nicht gezeigt) des Möbelteils befestigt. Durch Drehen der Rändelmutter 12 ist der rechte Anlageabschnitt 15 in einem Abstand zum linken Anlageabschnitt 10 positionierbar, der größer als einer Breite B der Bewegungsschiene 2 ist. Dadurch lässt sich das Möbelteil mit der Montagevorrichtung 1 vergleichsweise einfach auf der Bewegungsschiene 2 entlangschieben, bis die Montagevorrichtung 1 an der Anbringeinrichtung 2d anschlägt.

Ein Abstand zwischen den Anlageabschnitten 10 und 15 kann dabei derart eingestellt sein, dass ein seitliches Bewegungsspiel der Montagevorrichtung 1 auf der Bewegungsschiene 2 ein zuverlässiges Einführen der hakenförmigen Anbringeinrichtung 2d an einer Aufnahmeöffnung 16 an der Stützplatte 5 nicht verhindern kann. Vorzugsweise ist die Montagevorrichtung 1 Teil eines Montagesystems, von dem hier nur die Montagevorrichtung 1 gezeigt ist. Das Montagesystem kann eine zweite erfindungsgemäße Montagevorrichtung (nicht gezeigt) umfassen, die zur Montagevorrichtung 1 spiegelbildlich aufgebaut ist. Dabei ist die zweite Montagevorrichtung derart spiegelbildlich ausgeführt, dass sie z.B. durch Spiegelung an einer senkrecht zur ebenen Fläche an der Anbringseite der Montageplatte stehenden und parallel z.B. zur seitlichen Kante 3d oder 3e angeordneten Ebene aus der Montagevorrichtung 1 hervorgeht. Dadurch lässt sich das Montagesystem z.B. symmetrisch insbesondere ohne seitlich überstehende Teile an einer Rückseite eines beweglichen Möbelteils, z.B. einer Schublade anbringen.

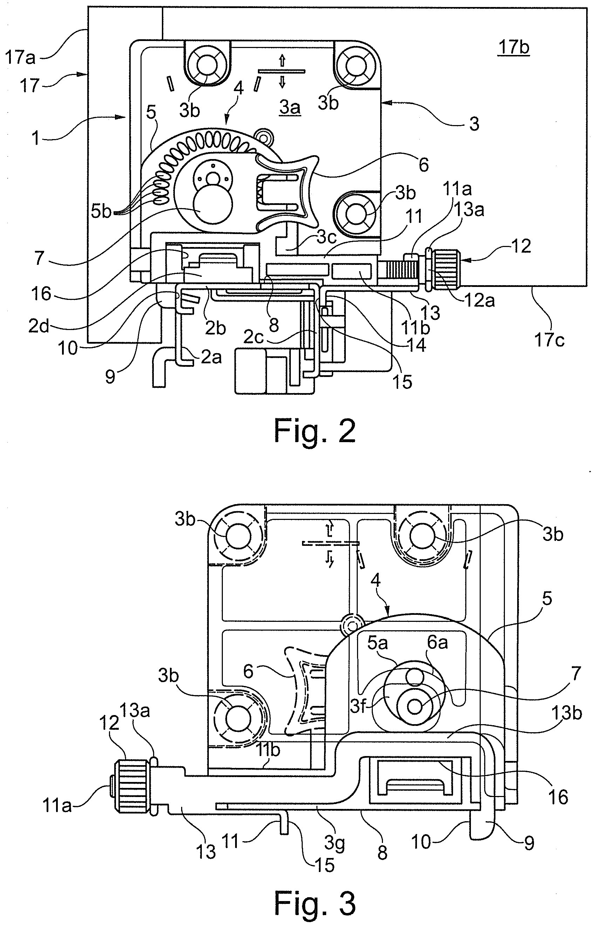

In den Figuren 2 und 3 ist eine zweite nicht erfindungsgemäße Montagevorrichtung 1 gezeigt, wobei in Fig.2 eine Anordnung der Montagevorrichtung 1 an einem beweglichen Möbelteil 17, insbesondere in Form einer Schublade dargestellt ist. Das Möbelteil 17 weist eine Seitenwand 17a und eine Rückwand 17b auf. An den Bohrungen 3b kann eine Montageplatte 3 der Montagevorrichtung 1 an der Rückwand 17b des Möbelteils 17 mit z.B. Schrauben (nicht gezeigt) oder z.B. Nägeln (nicht gezeigt) befestigt sein. Das Möbelteil 17 ist mit der Montagevorrichtung 1 an einer Bewegungsschiene 2 positioniert und angebracht, wobei die Bewegungsschiene 2 das einzige in den Figuren 2 und 3 dargestellte Element einer Führungseinheit ist.

Die Montagevorrichtung 1 weist eine Höhenverstelleinrichtung 4 auf, die im Wesentlichen mit derjenigen des ersten Ausführungsbeispiels übereinstimmt. Dabei sind insbesondere in Figur 3 weitere Einzelheiten der Höhenverstelleinrichtung 4 erkennbar. An einem Stellhebel 6 ist ein kreisscheibenförmiger Vorsprung 6a ausgebildet, mit dem der Stellhebel 6 in einer kreisförmigen Öffnung 5a einer Stützplatte 5 gelagert ist.

Exzentrisch zur Kreisscheibenform des Vorsprungs 6a des Stellhebels 6 ragt ein Schiebebolzen 7 durch den Stellhebel 6 und die Stützplatte 5 hindurch und in ein horizontal erstrecktes Langloch 3f der Montageplatte 3 hinein. Durch ein Drehen des Stellhebels 6 ist der Schiebebolzen 7 um einen gemeinsamen Mittelpunkt des kreisscheibenförmigen Vorsprungs 6a und der Öffnung 5a auf einer kreisbogenförmigen Bahn bewegbar, wobei mit dem Langloch 3f ein seitliches Bewegungsspiel an der Montageplatte 3 für den Schiebebolzen 7 bereitgestellt ist.

Bei einem Drehen des Stellhebels 6 ist dadurch eine ausschließlich vertikale Verschiebung der Montageplatte 3 gegenüber der Stützplatte 5 erreichbar, wobei Stützkräfte über den in der Öffnung 5a gelagerten Vorsprung 6a und den Schiebebolzen 7 übertragen werden. Auf diese Weise ist eine Unterkante 3g der Montageplatte und eine Unterkante 17c des Möbelteils 17, das mit der Montageplatte 3 verbunden ist, über eine Unterkante 8 der Stützplatte 5 anhebbar und vertikal durch Arretierung des Stellhebels 6, z.B. in einer der Rastvertiefungen 5b, positionierbar. Die Unterkante 8 ist vorzugsweise auf einem horizontalen, geraden Profilabschnitt 2b der Bewegungsschiene 2 abgestützt, auf dem die Unterkante 8 vorzugsweise gleichmäßig auf- bzw. anliegt. Gegebenenfalls ist mit der Höhenverstelleinrichtung 4 eine Lage der Unterkante 8 der Stützplatte 5 oberhalb der Unterkante 3g der Montageplatte 3 einstellbar. Dadurch lässt sich die Höhenverstelleinrichtung 4 entlasten, wenn die Montageplatte 3 in z.B. einer geeigneten Position an der Rückwand 17b angebracht ist, die keine zusätzliche Verstellung mehr erfordert.

Im Unterschied zum ersten Ausführungsbeispiel (Fig.1) sind an der nicht erfindungsgemäßen Montagevorrichtung 1, die in den Figuren 2 und 3 gezeigt ist, sowohl ein erster Vorsprung 9 als auch ein zweiter Vorsprung 14 miteinander im Wesentlichen starr über ein Verbindungsjoch 13b eines Schlittenelements 13 verbunden. Dabei sind ein erster Anlageabschnitt 10 und ein zweiter Anlageabschnitt 15 in einem festen Abstand zueinander derart angeordnet, dass sich zwischen den Anlageabschnitten 10 und 15 die Bewegungsschiene 2 anordnen lässt.

Das Schlittenelement 13 ist mit einem Eingreifabschnitt 13a an eine Stellmutter 12 gekoppelt, an der eine Nut 12a für einen koppelnden Eingriff des Eingreifabschnitts 13a vorgesehen ist. Die Stellmutter 12 ist auf einen Gewindeabschnitt 11a eines Balkenabschnitts 11 aufgeschraubt, mit dem die Unterkante 8 der Stützplatte 5 über mindestens eine gesamte Breite des horizontalen Profilabschnitts 2b der Bewegungsschiene 2 verlängert ist.

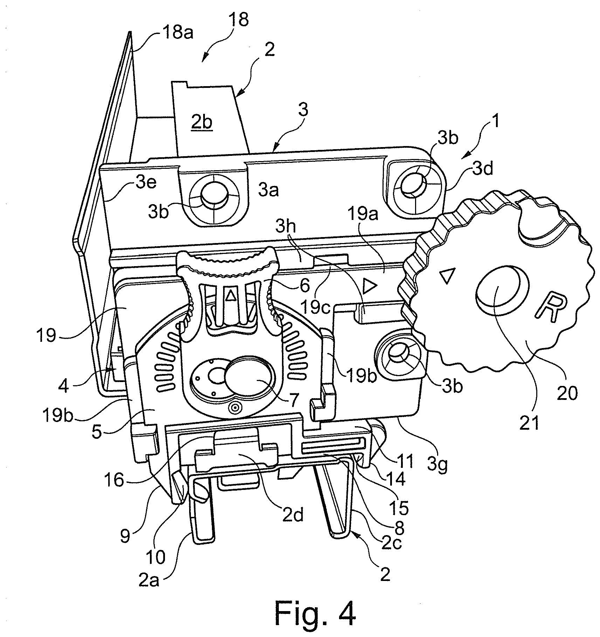

Durch ein Drehen der Rändelmutter 12 lässt sich das Schlittenelement 13 gegenüber der Stützplatte 5 entlang der Unterkante 8 verschieben und positionieren, wobei Positionen von beiden Anlageabschnitten 10 und 15 gleichzeitig veränderbar sind. Weil die Anlageabschnitte 10 und 15 von entgegengesetzten Seiten an der Bewegungsschiene 2 angreifen können, bietet die Montagevorrichtung 1 die Möglichkeit, eine Position des Möbelteils 17 in entgegengesetzte Richtungen zu verstellen. Wenn ein Abstand der Anlageabschnitte 10 und 15 insbesondere für ein relativ kleines oder kein Bewegungsspiel an eine Breite der Bewegungsschiene 2 angepasst ist, lässt sich die Montagevorrichtung 1 als einstellbares Festlager für eine seitliche Positionierung des Möbelteils 17 einsetzen, wodurch eine zweite Montagevorrichtung (nicht gezeigt), die für eine Montage des Möbelteils an einer zweiten Bewegungsschiene (nicht gezeigt) vorgesehen ist, als Loslager mit einem seitlichen Bewegungsspiel und gegebenenfalls mit zumindest einem feststehenden Anlageabschnitt (nicht gezeigt) ausgebildet sein kann. Eine dritte, nicht erfindungsgemäße Montagevorrichtung 1 ist in Figur 4 gezeigt. Dabei ist die Montagevorrichtung 1 auf einer Bewegungsschiene 2 einer Führungseinheit 18 montiert. Die Bewegungsschiene 2 ist entlang einer Längsachse der Führungseinheit 18 verschiebbar, wobei die Bewegungsschiene 2 mittelbar oder unmittelbar - z.B. über eine Zwischenschiene (nicht gezeigt) - an einer Korpusschiene 18a beweglich geführt und gelagert ist. Die Bewegungsschiene 2 weist an einem Endabschnitt eine Anbringeinrichtung 2d auf, wodurch eine Montageposition für die Montagevorrichtung 1 vorgegeben ist. An der Montagevorrichtung 1 ist eine Aufnahmeöffnung 16 ausgebildet, die vorzugsweise für einen spielfreien Eingriff der insbesondere hakenförmigen Anbringeinrichtung 2d vorgesehen ist.

Die Montagevorrichtung 1 umfasst eine Höhenverstelleinrichtung 4, mit der eine Montageplatte 3 durch Drehen eines Stellhebels 6 in vertikaler Richtung gegenüber einer Stützplatte 5 verschiebbar bzw. verstellbar ist. Allerdings besteht ein Unterschied zum zweiten Ausführungsbeispiel darin, dass ein Schiebebolzen 7 nicht unmittelbar in die Montageplatte 3 sondern in eine Zwischenplatte 19 eingreift. An einer Rückseite 3a der Montageplatte 3 sind gerade leistenförmige Führungsvorsprünge 3h feststehend ausgebildet, die parallel zu einer geraden horizontalen Unterkante 3g der Montageplatte 3 verlaufen. Mit den Führungsvorsprüngen 3h ist die Zwischenplatte 19 an der Montageplatte 3 horizontal verschiebbar geführt, wobei ein oberer der Führungsvorsprünge 3h zur Übertragung von Stützkräften für eine vertikale Positionierung der Montageplatte vorgesehen und ausgebildet ist.

An der Zwischenplatte 19 sind feststehende Führungsvorsprünge 19b ausgebildet, die in einem montierten Zustand der Montagevorrichtung 1 in vertikaler Richtung gerade verlaufen. Die Führungsvorsprünge 19b sind an der Zwischenplatte 19 derart angeordnet und ausgebildet, dass mit diesen die Stützplatte 5 in vertikaler Richtung beweglich einstellbar ist.

Ein weiterer Unterschied der in Figur 4 gezeigten Montagevorrichtung 1 zur zweiten Ausführung besteht darin, dass ein erster Vorsprung 9 und ein zweiter Vorsprung 14 feststehend an der Stützplatte 5 ausgebildet sind. Die Stützplatte 5 ist an der Unterkante 8 durch einen Balkenabschnitt 11 erweitert, um die Unterkante 8 über mindestens eine horizontale Breite der Bewegungsschiene 2 für ein dichtes Anliegen an einem mittleren Profilabschnitt 2b der Bewegungsschiene 2 auszubilden.

Unterhalb der Unterkante 8 ragen an die Vorsprünge 9 und 14 nach unten hervor, die mit der Stützplatte 5 fest verbunden sind. An einander gegenüberliegenden Seiten der beiden Vorsprünge 9 und 14 ist jeweils einer der Anlageabschnitte 10 bzw. 15 ausgebildet. Die Anlageabschnitte 10 und 15 sind in einem festen Abstand voneinander entlang der Unterkante 8 angeordnet, bei dem der Montagevorrichtung 1 im gezeigten montierten Zustand nur ein vergleichsweise geringes seitliches Bewegungsspiel gegenüber der Bewegungsschiene 2 zur Verfügung steht. Das Bewegungsspiel kann weniger als z.B. 50% oder z.B. 25%, besser weniger als 10%, insbesondere weniger als 5% und vorzugsweise weniger als 2% einer Breite der Bewegungsschiene 2, insbesondere im Bereich der Anbringvorrichtung 2d sein.

Um die Anlageabschnitte 10 und 15 gegenüber der Montageplatte 3 in horizontaler Richtung verstellen zu können, sind die Führungsvorsprünge 3h über eine seitliche Kante 3d der Montageplatte 3 hinausragend verlängert. Vorzugsweise ist die Montageplatte 3 in einem Bereich zwischen den beiden Führungsvorsprüngen 3h ebenfalls über die Kante 3d hinaus erweitert. An den Führungsvorsprüngen 3h ist ein Drehzapfen 21 in einer seitlich herausragenden Position angebracht, an dem ein Stellrad 20 gelagert ist. Das Stellrad 20 weist an einer der Montageplatte 3 zugewandten Seite (nicht sichtbar) eine Stellkontur (nicht sichtbar) auf.

In einem Bereich einer Oberkante 19c weist die Zwischenplatte 19 einen seitlich hervorragenden, streifenförmigen Balkenabschnitt 19a auf, der zwischen den Führungsvorsprüngen 3h bezüglich der Montageplatte 3 seitlich verschiebbar gelagert ist. An einem vom Stellrad 20 verdeckten Bereich des Balkenabschnitts 19a der Zwischenplatte 19 ist eine Eingreifstruktur (nicht gezeigt), z.B. in Form eines in das Stellrad hineinragenden Zapfens (nicht gezeigt), ausgebildet, der in die Stellkontur des Stellrads 20 z.B. eingreift. Die Stellkontur des Stellrads 20 ist derart ausgebildet, dass durch ein Drehen des Stellrads 20 die Eingreifstruktur des Balkenabschnitts 19a und damit die Zwischenplatte 19 mit der Höhenverstelleinrichtung 4 in horizontaler Richtung parallel zur Montageplatte 3 verstellbar ist.

### Bezugszeichenliste:

- 1: Montagevorrichtung
- 2: Bewegungsschiene
- 2a: Profilabschnitt
- 2b: Profilabschnitt (horizontal)
- 2c: Profilabschnitt
- 2d: Anbringeinrichtung
- 3: Montageplatte
- 3a: Rückseite
- 3b: Bohrungen
- 3c: Führungsvorsprung
- 3d: Seitenkante (vertikal)
- 3e: Seitenkante (vertikal)
- 3f: Langloch
- 3g: Unterkante (der Montageplatte)
- 3h: Führungsvorsprung (horizontal)
- 4: Höhenverstelleinrichtung
- 5: Stützplatte
- 5a: Öffnung
- 5b: Rastvertiefung
- 6: Stellhebel
- 6a: Vorsprung
- 7: Schiebebolzen
- 8: Unterkante
- 9: Vorsprung
- 10: Anlageabschnitt
- 11: Balkenabschnitt
- 11a: Gewindebolzen
- 11b: Verbindungsabschnitt
- 12: Rändelmutter
- 12a: Nut
- 13: Schlittenelement
- 13a: Eingreifabschnitt
- 13b: Verbindungsjoch
- 14: Vorsprung
- 15: Anlageabschnitt
- 16: Aufnahmeöffnung (an Stützplatte)
- 17: Möbelteil
- 17a: Seitenwand
- 17b: Rückwand
- 17c: Unterkante
- 18: Führungseinheit
- 18a: Korpusschiene
- 19: Zwischenplatte
- 19a: Balkenabschnitt (streifenförmig)
- 19b: Führungsvorsprung
- 19c: Oberkante
- 20: Stellrad
- 21: Drehzapfen

## Patentansprüche

1. Vorrichtung (1) zur Anbringung einer Führungseinheit (18) an einem ersten Möbelteil (17), das gegenüber einem zweiten Möbelteil beweglich geführt ist, wobei die Führungseinheit (18) eine am zweiten Möbelteil angeordnete Korpusschiene (18a) und eine am ersten Möbelteil (17) angeordnete Bewegungsschiene (2) umfasst, wobei an einer Unterkante (3g, 8) der Vorrichtung, die zur Anordnung an der Bewegungsschiene (2) vorgesehen ist, zwei Anlageabschnitte (10, 15) in einem Abstand voneinander angeordnet sind, wobei jeder der Anlageabschnitte (10, 15) an einer dem jeweils anderen Anlagenabschnitt (10, 15) zugewandten Seite ausgebildet ist, so dass zwischen den Anlageabschnitten (10, 15) die Bewegungsschiene (2) anordenbar ist, **dadurch gekennzeichnet, dass** die Anlageabschnitte (10, 15) an der Vorrichtung derart verstellbar gelagert sind, dass eine Position der Anlageabschnitte (10, 15) veränderbar ist, so dass die Positionen der Anlageabschnitte (10, 15) an der Vorrichtung (1) unabhängig voneinander einstellbar sind, um im montierten Zustand das erste Möbelteil (17) in einer horizontalen Richtung bezüglich der Bewegungsschiene (2) ausrichten zu können.

2. Vorrichtung (1) nach einem der vorgenannten Ansprüche, **dadurch gekennzeichnet, dass** zumindest einer der Anlageabschnitte (10, 15) an einem Abstützelement (5) angebracht ist, das zum Abstützen der Vorrichtung (1) an der Bewegungsschiene (2) ausgebildet ist.

3. Vorrichtung (1) nach einem der vorgenannten Ansprüche, **dadurch gekennzeichnet, dass** die Positionen der beiden Anlageabschnitte (10, 15) an der Vorrichtung (1) miteinander gekoppelt einstellbar sind.

4. Vorrichtung (1) nach einem der vorgenannten Ansprüche, **dadurch gekennzeichnet, dass** der Abstand zwischen den beiden Anlageabschnitten (10, 15) fest vorgegeben ist.

5. Vorrichtung (1) nach einem der vorgenannten Ansprüche, **dadurch gekennzeichnet, dass** die beiden Anlageabschnitte (10, 15) über ein verschiebbares Verbindungsjoch (13b) miteinander verbunden sind.

6. Vorrichtung (1) nach einem der vorgenannten Ansprüche, **dadurch gekennzeichnet, dass** die Position zumindest eines der Anlageabschnitte (10, 15) durch eine Stellschraube (11a, 12) verstellbar ist.

7. Vorrichtung (1) nach einem der vorgenannten Ansprüche, **dadurch gekennzeichnet, dass** die Position von zumindest einem der Anlageabschnitte (10, 15) mittels eines Drehelements (20) mit einer spiralförmigen Stellkontur verstellbar ist.

8. Vorrichtung (1) nach einem der vorgenannten Ansprüche, **dadurch gekennzeichnet, dass** am Abstützelement (5) eine Arretierungsaufnahme (16) für eine Arretierungseinrichtung (2d) der Bewegungsschiene (2) ausgebildet ist.

9. Vorrichtung (1) nach Anspruch 8, **dadurch gekennzeichnet, dass** die Arretierungsaufnahme (16) für eine spielfreie Aufnahme eines Abschnitts der Arretierungseinrichtung (2d) ausgebildet ist.

10. Vorrichtung (1) nach einem der vorgenannten Ansprüche, **dadurch gekennzeichnet, dass** die Vorrichtung (1) ein Montageelement (3) umfasst, das für eine Anbringung der Vorrichtung (1) am ersten Möbelteil (17) vorgesehen ist.

11. Vorrichtung (1) nach Anspruch 10, **dadurch gekennzeichnet, dass** die verstellbaren Anlageabschnitte (10, 15) am Montageelement (3) verschiebbar gelagert sind.

12. Anbringvorrichtung mit zwei Anbringeinheiten zur Anbringung einer Führungsvorrichtung an einem ersten Möbelteil (17), das mit zwei Führungseinheiten (18) der Führungsvorrichtung gegenüber einem zweiten Möbelteil beweglich geführt ist, wobei jede Führungseinheit (18) eine am ersten Möbelteil (17) angeordnete Bewegungsschiene (2) umfasst und wobei für jede Bewegungsschiene (2) jeweils eine der Anbringeinheiten für eine Anbringung des ersten Möbelteils (17) an der entsprechenden Führungseinheit (18) vorgesehen ist, **dadurch gekennzeichnet, dass** zumindest eine der zwei Anbringeinheiten eine Vorrichtung (1) nach einem der vorgenannten Ansprüche ist.

13. Anbringvorrichtung nach Anspruch 12, **dadurch gekennzeichnet, dass** beide Anbringeinheiten Vorrichtungen (1) nach einem der Ansprüche 1 bis 11 sind, wobei die beiden Anbringeinheiten spiegelsymmetrisch zueinander ausgebildet sind.

14. Möbel mit einer Vorrichtung (1) nach einem der Ansprüche 1 bis 11.

## Claims

1. Device (1) for attaching a guide unit (18) to a first furniture part (17) which is guided so as to be movable in relation to a second furniture part, wherein the guide unit (18) comprises a basic unit rail (18a) arranged on the second furniture part and a motion rail (2) arranged on the first furniture part (17), wherein two bearing portions (10, 15) are arranged so as to be spaced apart from one another on a lower edge (3g, 8) of the device, which is provided for arrangement on the motion rail (2), wherein each of the bearing portions (10, 15) is formed on a side which faces the respective other bearing portion (10, 15), so that the motion rail (2) can be arranged between the bearing portions (10, 15), **characterised in that** the bearing portions (10, 15) are mounted adjustably on the device such that the positions of the bearing portions (10, 15) on the device (1) can be adjusted independently of one another so as to be able to align the first furniture part (17) in the assembled state in a horizontal direction in relation to the motion rail (2).

2. Device (1) according to any of the preceding claims, **characterised in that** at least one of the bearing portions (10, 15) is attached to a support element (5) which is designed to support the device (1) on the motion rail (2).

3. Device (1) according to any of the preceding claims, **characterised in that** the positions of the two bearing portions (10, 15) on the device (1) are coupled to one another adjustably.

4. Device (1) according to any of the preceding claims, **characterised in that** the spacing between the two bearing portions (10, 15) is fixed.

5. Device (1) according to any of the preceding claims, **characterised in that** the two bearing portions (10, 15) are connected to one another by a displaceable connecting yoke (13b).

6. Device (1) according to any of the preceding claims, **characterised in that** the position of at least one of the bearing portions (10, 15) can be adjusted by means of a set screw (11a, 12).

7. Device (1) according to any of the preceding claims, **characterised in that** the position of at least one of the bearing portions (10, 15) can be adjusted by means of a rotary element (20) with a helical driving contour.

8. Device (1) according to any of the preceding claims, **characterised in that** on the support element (5) a locking mount (16) is formed for a locking mechanism (2d) of the motion rail (2).

9. Device (1) according to claim 8, **characterised in that** the locking mount (16) is designed for mounting a section of the locking mechanism (2d) without play.

10. Device (1) according to any of the preceding claims, **characterised in that** the device (1) comprises an assembly element (3), which is provided for attaching the device (1) onto the first furniture part (17).

11. Device (1) according to claim 10, **characterised in that** the adjustable bearing sections (10, 15) are mounted displaceably on the assembly element (3).

12. Attachment device comprising two attachment units for attaching a guide device to a first furniture part (17) which is guided by two guide units (18) of the guide device so as to be movable in relation to a second furniture part, wherein each guide unit (18) comprises a motion rail (2) which is arranged on the first furniture part (17), and wherein for each motion rail (2) respectively one of the attachment units is provided for attaching the first furniture part (17) to the corresponding guide unit (18), **characterised in that** at least one of the two attachment units is a device (1) according to any of the preceding claims.

13. Attachment device according to claim 12, **characterised in that** both attachment units are devices (1) according to any of claims 1 to 11, wherein the two attachment units are configured so as to be mirror-symmetrical in relation to one another.

14. Piece of furniture comprising a device (1) according to any of claims 1 to 11.

## Revendications

1. Dispositif (1) pour fixer une unité de guidage (18) sur une première pièce de meuble (17) guidée mobile par rapport à une seconde pièce de meuble, l'unité de guidage (18) comprenant un rail de caisson (18a) disposé sur la seconde pièce de meuble et un rail de déplacement (2) disposé sur la première partie de meuble (17), deux sections de butée (10, 15) étant disposées à distance l'une de l'autre sur un bord inférieur (3g, 8) du dispositif prévu, lequel bord inférieur étant prévu pour être placé sur le rail de déplacement (2), chacune des sections de butée (10, 15) étant configurée, sur un côté faisant face à l'autre section de butée (10, 15), de sorte que le rail de déplacement (2) peut être disposé entre les sections de butée (10, 15), **caractérisé en ce que** les sections de butée (10, 15) sont montées de manière ajustable sur le dispositif de telle sorte qu'une position des sections de butée (10, 15) est modifiable de manière à ce que les positions des sections de butée (10, 15) sur le dispositif (1) peuvent être ajustées indépendamment l'une de l'autre en vue de pouvoir orienter dans une direction horizontale la première pièce de meuble (17), à l'état assemblé, par rapport au rail de déplacement (2).

2. Dispositif (1) selon l'une des revendications précédentes, **caractérisé en ce qu'**au moins une des sections de butée (10, 15) est fixée à un élément de support (5) configuré pour supporter le dispositif (1) sur le rail de déplacement (2).

3. Dispositif (1) selon l'une des revendications précédentes, **caractérisé en ce que** les positions des deux sections de butée (10, 15) sur le dispositif (1) sont réglables en étant couplées ensemble.

4. Dispositif (1) selon l'une des revendications précédentes, **caractérisé en ce que** la distance entre les deux sections de butée (10, 15) est fixement prédéfinie.

5. Dispositif (1) selon l'une des revendications précédentes, **caractérisé en ce que** les deux sections de butée (10, 15) sont reliées entre elles au moyen d'une entretoise de liaison mobile (13b).

6. Dispositif (1) selon l'une des revendications précédentes, **caractérisé en ce que** la position d'au moins l'une des sections de butée (10, 15) peut être ajustée par une vis de réglage (11a, 12).

7. Dispositif (1) selon l'une des revendications précédentes, **caractérisé en ce que** la position d'au moins l'une des sections de butée (10, 15) peut être ajustée au moyen d'un élément rotatif (20) ayant un contour de réglage en forme de spirale.

8. Dispositif (1) selon l'une des revendications précédentes, **caractérisé en ce qu'**un logement d'arrêt (16) est formé sur l'élément de support (5) pour un dispositif d'arrêt (2d) du rail de déplacement (2).

9. Dispositif (1) selon la revendication 8, **caractérisé en ce que** le logement d'arrêt (16) est configuré pour recevoir sans jeu une section du dispositif d'arrêt (2d).

10. Dispositif (1) selon l'une des revendications précédentes, **caractérisé en ce que** les le dispositif (1) comprend un élément d'assemblage (3) prévu pour fixer le dispositif (1) sur la première pièce de meuble (17).

11. Dispositif selon la revendication 10, **caractérisé en ce que** les sections de butée (10, 15) ajustables sont reçues mobiles sur l'élément d'assemblage (3).

12. Dispositif de fixation ayant deux unités de fixation pour fixer un dispositif de guidage sur une première partie de meuble (17) guidée mobile par rapport à une seconde partie de meuble au moyen de deux unités de guidage (18) du dispositif de guidage, chaque unité de guidage (18) comprenant un rail de déplacement (2) disposé sur la première partie de meuble (17), et, pour chaque rail de déplacement (2), une des unités de fixation est prévue pour fixer la première partie de meuble (17) à l'unité de guidage (18) correspondante, **caractérisé en ce que** l'une au moins des deux unités de fixation est un dispositif (1) selon l'une des revendications précédentes.

13. Dispositif de fixation selon la revendication 12, **caractérisé en ce que** les deux unités de fixation sont des dispositifs (1) selon l'une des revendications 1 à 11, les deux unités de fixation étant formées l'une par rapport à l'autre selon une symétrie de miroir.

14. Meuble comportant un dispositif (1) selon l'une des revendications 1 à 11.
